# EUROPÄISCHE PATENTSCHRIFT

(11) **EP 0 642 204 B1**
(45) Veröffentlichungstag und Bekanntmachung des Hinweises auf die Patenterteilung: **22.01.1997**
(21) Anmeldenummer: 94112711.0
(22) Anmeldetag: 13.08.1994
(51) Int. Cl.: H02K 1/27

(54) **Rotoranordnung für eine elektrische Maschine**
Rotor assembly for an electric machine
Agencement de rotor pour une machine électrique

(30) Priorität: 07.09.1993 DE 4330272
(43) Veröffentlichungstag der Anmeldung: 08.03.1995
(73) Patentinhaber: J.M. Voith GmbH, D-89522 Heidenheim (DE)
(72) Erfinder: Lange, Andreas, D-89522 Heidenheim (DE); Hölle, Michael, D-89555 Steinheim am Albuch/Söhnstetten (DE); Angerer, Wolfram, D-89522 Heidenheim (DE); Müller, Robert, Dr., D-89407 Dillingen/Donau (DE); Mühlberger, Uwe, D-89522 Heidenheim (DE); Kaiser, Karl, Dr., A-2700 Wiener Neustadt (AT)
(74) Vertreter: Weitzel, Wolfgang, Dr.-Ing. Patentanwalt

(56) Entgegenhaltungen:
- DE-U- 9 116 192
- PATENT ABSTRACTS OF JAPAN vol. 8, no. 161 (E-257) (1598) 26. Juli 1984 & JP-A-59 059 057 (FANUC) 4. April 1984

## Beschreibung

Die Erfindung betrifft eine Rotoranordnung für eine elektrische Maschine, insbesondere für eine Transversalflußmaschine, wobei der Rotor in Umfangsrichtung eine Vielzahl von polarisierten Magneten und magnetisierbaren Sammlerelementen in abwechselnder Folge in einer Ringanordnung aufweist und wobei der Rotor in axialer Richtung eine an der Rotorachse befestigbare Rotorscheibe aufweist, an der die polarisierten Magneten und die magnetisierbaren Sammlerelemente jeweils in einer konzentrischen Ringanordnung befestigt sind.

Derartige Rotoranordnungen für elektrische Maschinen sind in verschiedenen Bauformen bekannt und werden beispielsweise bei Transversalflußmaschinen verwendet, bei denen es häufig erwünscht ist, eine kleine Polteilung zu erreichen, beispielsweise bei Ausführungsformen gemäß der DE 37 05 089 C2.

Bei derartigen Rotoranordnungen sind die polarisierten Magneten um die magnetisierbaren Sammlerelemente jeweils in abwechselnder Folge in einer Ringanordnung vorgesehen, wobei die Sammlerelemente üblicherweise aus axial geschichteten Elektroblechen aufgebaut sind. Die jeweiligen Ringanordnungen sind in axialer Richtung isoliert gegeneinander montiert, beispielsweise unter Verwendung von isolierenden Kunststoffteilen.

Da bei solchen Rotoranordnungen eine kleine Polteilung erwünscht ist, ergibt sich eine filigrane Rotorstruktur, die hinsichtlich der Fertigungstechnik anspruchsvoll ist. Einerseits ist eine mechanisch präzise Anordnung der Komponenten erforderlich, andererseits muß auch die notwendige Festigkeit gewährleistet werden. Zu diesem Zweck werden Kombinationen von Klebverbindungen und mechanischen Verbindungen mit konstruktiven Elementen verwendet, wobei Nieten, Bolzen und Schrauben zur Anwendung gelangen.

Aufgrund der engen Raumverhältnisse in der Rotoranordnung hat man derartige Schrauben bisher durch Bohrungen in den Blechpaketen der Sammlerelemente hindurchgeführt. Diese Bauform hat sich in der Praxis allerdings als unvorteilhaft herausgestellt, weil derartige Bolzen oder Schrauben zur Befestigung Störungen hervorrufen.

Da nämlich die Schrauben durch Bohrungen in den (geblechten) Sammlerelementen hindurchgehen und ihrerseits naturgemäß nicht geblecht sind, wird der verfügbare Querschnitt des in radialer Richtung verlaufenden magnetischen Flusses stark eingeengt. Dies führt schon bei kleinen magnetischen Durchflutungen zur Sättigung. Durch die Ummagnetisierung der Sammlerelemente werden in den Schrauben Wirbelströme erzeugt, die bei den erforderlichen Ummagnetisierungsfrequenzen zu erheblichen Ummagnetisierungsverlusten führen und in unerwünschter Weise eine Erwärmung des Rotors hervorrufen.

Die erfindungsgemäße Aufgabe besteht darin, eine Rotoranordnung für eine elektrische Maschine anzugeben, bei der solche Ummagnetisierungsverluste mit der daraus resultierenden Erwärmung des Rotors vermieden werden.

Die erfindungsgemäße Lösung besteht darin, eine Rotoranordnung der eingangs genannten Art so auszubilden, daß die Befestigung mit Befestigungselementen vorgesehen ist, die durch die polarisierten Magneten hindurchgehen und an der Rotorscheibe bzw. an einem axial beabstandeten, mit der Rotorscheibe verbundenen Isolierringelement befestigt sind.

Mit der erfindungsgemäßen Rotoranordnung wird die Aufgabe in zufriedenstellender Weise gelöst. Da die Befestigungselemente durch die polarisierten Magneten hindurchgehen, findet bei ihnen keine Ummagnetisierung statt. Außerdem wird der verfügbare Querschnitt in den Sammlerelementen nicht reduziert oder beeinträchtigt.

In Weiterbildung der erfindungsgemäßen Rotoranordnung ist vorgesehen, daß die polarisierten Magneten mit axialen Durchgangsbohrungen versehen oder in radialer Richtung paarweise angeordnet und durch einen Spalt voneinander getrennt sind, durch den die Befestigungselemente mit ihrem Schaft hindurchgehen. Derartige Komponenten sind fertigungstechnisch leicht zu realisieren, wobei gleichwohl eine sichere Befestigung mit kraftschlüssigen Verbindungen möglich ist.

Bei einer speziellen Bauform des Rotors ist vorgesehen, daß die Isolierringelemente und axial außen liegende Endringelemente mit axialen Einsenkungen versehen sind, welche Widerlager für die Köpfe der Befestigungselemente bilden. Dadurch ist eine kompakte, glatte Bauform des Rotors möglich. Zweckmäßigerweise werden als Befestigungselemente Nieten, Bolzen oder insbesondere Schrauben verwendet.

Bei einer speziellen Bauform des Rotors ist vorgesehen, daß die jeweiligen Isolierringelemente und/oder die Rotorscheibe mit Gewinden oder Gewindeeinsätzen zur Aufnahme von Schrauben versehen sind.

In Abhängigkeit von der speziellen Bauform des Rotors und dessen Anzahl von in axialer Richtung vorhandenen Ringanordnungen ist vorgesehen, daß die Sammlerelemente in axialer Richtung zwischen der Rotorscheibe und einem Isolierringelement bzw. zwischen einem Paar von Isolierringelementen bzw. zwischen einem Isolierringelement und einem axial äußeren Endringelement eingeklemmt sind und in Umfangsrichtung zwischen den Befestigungselementen angeordnet sind.

Zweckmäßigerweise sind bei dem erfindungsgemäßen Rotor die Sammlerelemente als geblechte Weicheisenteile ausgebildet, die in axialer Richtung des Rotors geschichtet sind. Die Isolierringelemente bestehen zweckmäßigerweise aus Kunststoff, wobei diese Isolierringelemente als vollständige Kreisringe oder als Kreisringsegmente ausgebildet sind, was die Fertigung der Komponenten erleichtert.

In Weiterbildung des erfindungsgemäßen Rotors ist vorgesehen, daß die Komponenten der Rotoranordnung zusätzlich mit Klebungen und/oder formschlüssig ineinandergreifenden Teilen verbunden sind.

Bei einer speziellen Bauform des erfindungsgemäßen Rotors ist vorgesehen, daß die Anordnung in axialer Richtung eine in der Mitte angeordnete Rotorscheibe aus nicht magnetisierbarem Material und zu beiden Seiten mindestens eine Ringanordnung mit abwechselnden Sammlerelementen und polarisierten Magneten aufweist, wobei die Ringanordnungen auf der einen Seite in Umfangsrichtung um einen Pol versetzt zu denen auf der gegenüberliegenden Seite angeordnet sind, und daß die Befestigungselemente um je einen Pol versetzt abwechselnd von den beiden Seiten des Rotors vorgesehen sind.

In Weiterbildung eines derartigen Rotors ist vorgesehen, daß bei einer Anordnung mit jeweils zwei Ringanordnungen zu beiden Seiten der Rotorscheibe die Befestigungselemente in Umfangsrichtung abwechselnd die axial inneren polarisierten Magneten und die Isolierringelemente an der Rotorscheibe befestigen sowie die axial äußeren polarisierten Magneten und die axial außen liegenden Endringelemente an den Isolierringelementen befestigen.

Auf diese Weise wird eine weitgehend symmetrische Anordnung geschaffen, wobei die Befestigungselemente gleichmäßig verteilt in der Rotoranordnung vorgesehen sind und in der Draufsicht beispielsweise jeder zweite polarisierte Magnet bzw. jedes zweite Paar von polarisierten Magneten mit Befestigungselementen an der Rotoranordnung befestigt ist.

Bei einer speziellen Bauform des erfindungsgemäßen Rotors ist vorgesehen, daß die Befestigungselemente durch mindestens zwei in axialer Richtung aufeinanderfolgende Ringanordnungen hindurchgehen, wobei sie die polarisierten Magneten und jeweils ein in axialer Richtung dazwischenliegendes Isolierringelement durchsetzen, und daß die Befestigungselemente in Umfangsrichtung elektrisch gegeneinander isoliert sind und auf der einen Seite an einem Endringelement angreifen und auf der anderen Seite an der Rotorscheibe befestigt sind.

In Weiterbildung des erfindungsgemäßen Rotors ist vorgesehen, daß die Befestigungselemente gegeneinander sowie gegenüber den polarisierten Magneten und gegenüber den Sammlerelementen elektrisch isoliert sind.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Die Zeichnungen zeigen in
- Fig. 1: einen Schnitt durch eine erste Ausführungsform einer erfindungsgemäßen Rotoranordnung längs der Linie B-B in Fig. 2;
- Fig. 2: einen Schnitt durch die erste Ausführungsform der erfindungsgemäßen Rotoranordnung längs der Linie A-A in Fig. 1;
- Fig. 3: einen Schnitt durch eine zweite Ausführungsform der erfindungsgemäßen Rotoranordnung längs der Linie D-D in Fig. 4;
- Fig. 4: einen Schnitt durch die zweite Ausführungsform der erfindungsgemäßen Rotoranordnung längs der Linie C-C in Fig. 3;
- Fig. 5: eine Schnittansicht durch eine herkömmliche Bauform einer Rotoranordnung längs der Linie E-E in Fig. 6; und in
- Fig. 6: einen Schnitt durch eine herkömmliche Rotoranordnung längs der Linie F-F in Fig. 5.

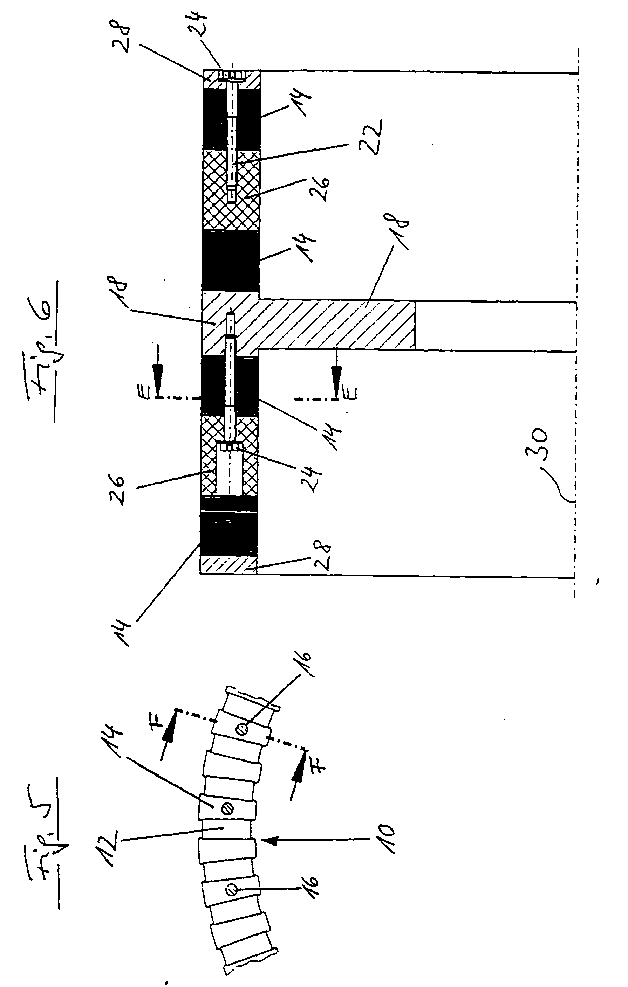

Die Gesamtsituation bei einer herkömmlichen Bauform einer Rotoranordnung ist schematisch in Fig. 5 und 6 dargestellt, wobei man in Fig. 5 einen Ringabschnitt eines Rotors 10 erkennt, der in Umfangsrichtung eine Vielzahl von polarisierten Magneten 12 und magnetisierbaren Sammlerelementen 14 aufweist, die in einer Ringanordnung in abwechselnder Folge vorgesehen sind. Durch die vorgesehene Anzahl von polarisierten Magneten 12 und magnetisierbaren Sammlerelementen 14 wird die gewünschte kleine Polteilung realisiert, die bei einer solchen Rotoranordnung gewünscht ist.

Bei dieser Ausführungsform ist jeder zweite polarisierte Magnet 12 mit einem schematisch angedeuteten Loch 16 versehen, das zur Aufnahme eines Befestigungselementes dient, um für die erforderliche feste mechanische Verbindung der Komponenten der Rotoranordnung zu sorgen.

Die Befestigung bei einer herkömmlichen Bauform der Rotoranordnung ist in Fig. 6 dargestellt, die einen Querschnitt durch den Rotor 10 zeigt. Dabei ist eine Rotorscheibe 18 vorgesehen, die einen radial nach innen vorstehenden Bereich aufweist, der mit geeigneten, nicht dargestellten Befestigungsteilen an der Rotorachse befestigt wird. Mit 30 ist die geometrische Achse dieser Rotoranordnung angedeutet.

Bei dieser herkömmlichen Bauform sind Befestigungselemente 22 vorgesehen, die einerseits an einem Isolierringelement 26 angreifen, durch ein Sammlerelement 14 hindurchgehen und in den Umfangsbereich der Rotorscheibe 18 eingreifen. Von einem solchen Isolierringelement 26 werden auch die in Umfangsrichtung neben dem Sammlerelement 14 liegenden polarisierten Magneten 12 gehalten und in axialer Richtung gegen die Rotorscheibe 18 gedrückt. Auf der rechten Seite dieser herkömmlichen Anordnung ist ein axial außen liegendes Sammlerelement 14 erkennbar, das mit einem Endringelement 28 abgedeckt ist. Die Befestigung dieser axial außen liegenden Komponenten ist im rechten Bereich der Anordnung gemäß Fig. 6 dargestellt.

Hierbei ist zu berücksichtigen, daß die Befestigungselemente 22 auf der linken Seite der Rotoranordnung, entsprechend der Unterseite bei der Darstellung gemäß Fig. 5, um ein Sammlerelement 14 in Umfangsrichtung versetzt vorgesehen sind. Mit anderen Worten, die Befestigungselemente 22 sind von der Oberseite und der Unterseite des Rotors in der jeweiligen Schicht der Ringanordnung abwechselnd eingesetzt. Bei dieser herkömmlichen Anordnung der als Schrauben ausgebildeten Befestigungselemente 22, welche die Sammlerelemente 14 durchsetzen, treten die eingangs beschriebenen Probleme auf. Der verfügbare Querschnitt des in radialer Richtung verlaufenden magnetischen Flusses ist stark eingeengt, und in den Schrauben als Befestigungselementen 22 werden Wirbelströme durch Ummagnetisierungen erzeugt, so daß es zu äußerst unerwünschten Erwärmungen des Rotors kommt, da derartige Befestigungselemente 22 in einer großen Vielzahl verteilt in dem Rotor vorgesehen sind.

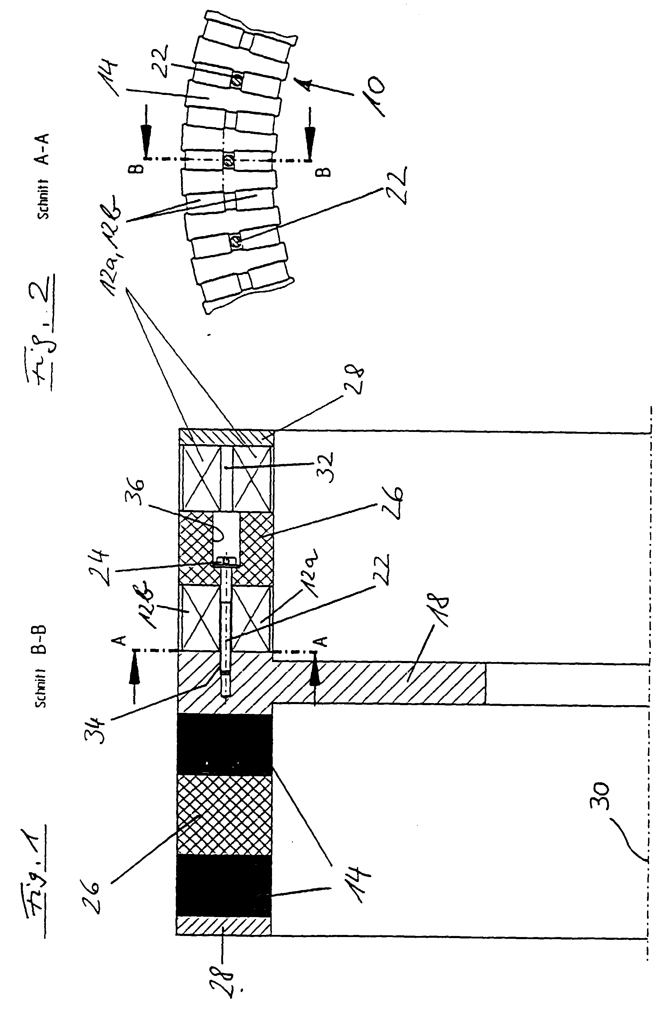

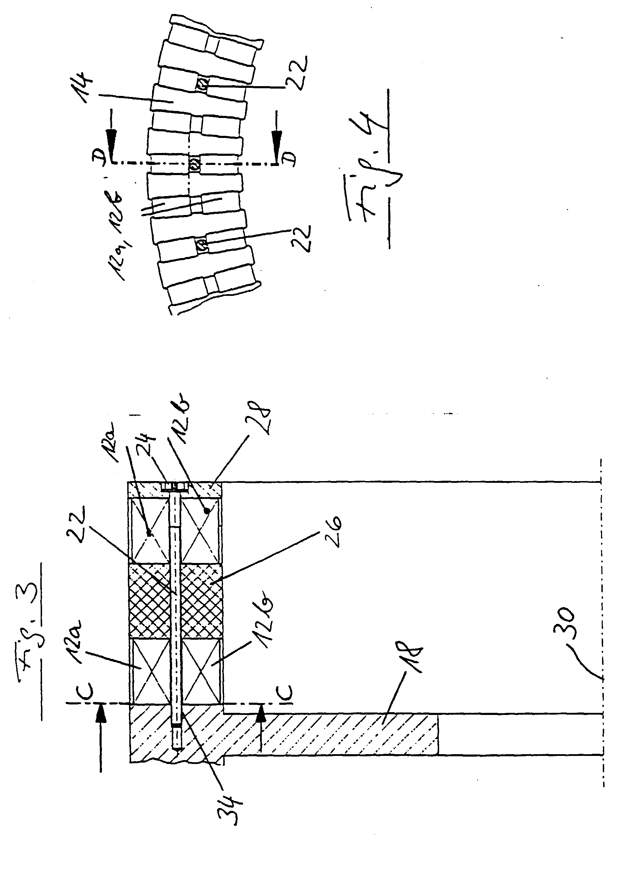

Fig. 1 und 2 der Zeichnungen zeigen eine erste Ausführungsform der erfindungsgemäßen Rotoranordnung. Man erkennt in Fig. 1 eine Rotorscheibe 18, die mit geeigneten, in der Zeichnung nicht dargestellten Befestigungsteilen an der Rotorachse befestigt wird, die schematisch bei 30 angedeutet ist. Wie aus Fig. 1 ersichtlich, werden die Sammlerelemente 14 nicht von Befestigungselementen durchsetzt; vielmehr sind die Sammlerelemente 14 in homogener Weise als Weicheisenteile aus axial geschichteten Elektroblechen aufgebaut und in axialer Richtung durch einen Isolierring 26 voneinander getrennt. Auf der axial außen liegenden Seite sind entsprechende Endringelemente 28 vorgesehen, die aus nicht magnetisierbarem Material bestehen.

Wie in Fig. 1 dargestellt, sind in diesem Falle die polarisierten Magneten 12a und 12b durch einen Spalt 32 in radialer Richtung voneinander getrennt. Dieser Spalt 32 bildet einen Durchgang für den Schaft eines Befestigungselementes 22, das mit seinem Kopf 24 in einer Einsenkung 36 eines Isolierringelementes 26 angreift und in das Material der Rotorscheibe 18 eingeschraubt ist. Zu diesem Zweck sind in der Rotorscheibe 18 Gewinde eingeschnitten oder Gewindeeinsätze 34, zweckmäßigerweise unverdrehbar, eingelassen, um Schrauben als Befestigungselemente 22 aufzunehmen. Alternativ zu Schrauben können selbstverständlich auch Bolzen oder Nieten verwendet werden.

Auf der rechten Seite der Rotoranordnung gemäß Fig. 1 erkennt man radial außen ein weiteres Paar von radial beabstandeten polarisierten Magneten 12a und 12b, die durch einen Spalt 32 voneinander getrennt sind und auf der Außenseite mit einem Endringelement 28 abgedeckt sind. Die Befestigung von solchen axial außen liegenden Endringelementen 28 und polarisierten Magneten 12a, 12b erfolgt mit entsprechenden Befestigungselementen 22, die aber in Umfangsrichtung versetzt, zweckmäßigerweise um ein solches Paar von polarisierten Magneten versetzt vorgesehen sind und in das axial angrenzende Isolierringelement eingreifen.

Selbstverständlich kann die Verteilung dieser Befestigungselemente 22 in Umfangsrichtung auch in größeren Abständen erfolgen, sofern die erforderliche Festigkeit der Rotoranordnung gewährleistet bleibt. Zu diesem Zweck können beispielsweise zusätzliche Klebungen und/oder formschlüssige Verbindungen der ineinandergreifenden Teile der Komponenten der Rotoranordnung dienen.

Der Vollständigkeit halber darf darauf hingewiesen werden, daß die Endringelemente 28, die Rotorscheibe 18 sowie die Befestigungselemente 22 aus nicht-magnetisierbarem Material bestehen, damit exakt definierte magnetische Verhältnisse bei der Rotoranordnung vorhanden sind.

Während bei der Ausführungsform gemäß Fig. 1 die polarisierten Magneten 12a und 12b durch einen Spalte 32 in radialer Richtung voneinander getrennt sind, ist es auch möglich, geeignet geformte polarisierte Magneten 12 zu verwenden, die in axialer Richtung verlaufende Durchgangsbohrungen aufweisen, um die entsprechenden Befestigungselemente 22 aufzunehmen.

Eine derartige Rotoranordnung weist mindestens zwei, üblicherweise sogar vier solche Ringanordnungen aus polarisierten Magneten und magnetisierbaren Sammlerelementen auf, wie es bei der Anordnung gemäß Fig. 1 schematisch dargestellt ist. Selbstverständlich ist es auch möglich, eine größere Anzahl von solchen Ringanordnungen in axialer Richtung zu verwenden, beispielsweise sechs Ringanordnungen, von denen zweckmäßigerweise drei auf jeder Seite der Rotorscheibe 18 vorgesehen und durch entsprechende Isolierringelemente 26 voneinander getrennt sind.

Bei einer solchen Bauform werden dann die Paare von polarisierten Magneten 12a, 12b bzw. polarisierten Magneten 12 mit Durchgangsbohrungen in der jeweiligen axial mittleren Lage so befestigt, daß die Befestigungselemente 22 diese polarisierten Magneten zwischen einem Paar von Isolierringelementen 26 einklemmen. Entsprechendes gilt, wenn zu einer Rotoranordnung mit acht Ringanordnungen übergegangen wird, die zweckmäßigerweise symmetrisch zu beiden Seiten der Rotorscheibe 18 vorgesehen sind. Dabei werden dann lediglich zusätzliche Isolierringelemente verwendet, die in der vorstehend beschriebenen Weise dazu dienen, die magnetisierbaren Sammlerelemente und die polarisierten Magneten zu befestigen, wobei das vorstehend beschriebene Prinzip verwendet wird.

In den Fig 3 und 4 ist eine zweite Ausführungsform der erfindungsgemäßen Rotoranordnung dargestellt, wobei gleiche Teile wie in Fig. 1 und 2 mit gleichen Bezugszeichen bezeichnet sind. Bei dieser Ausführungsform sind die Befestigungselemente 22 durchgehend ausgebildet, derart, daß sie bei der Anordnung gemäß Fig. 3 durch zwei in axialer Richtung aufeinanderfolgende Ringanordnungen hindurchgehen. Die Befestigungselemente 22 durchsetzen hierbei sowohl ein erstes Paar von Magneten 12a, 12b als auch ein zweites Paar von Magneten 12a und 12b, die radial beabstandet angeordnet sind. Zugleich gehen die Befestigungselemente 22 durch ein Isolierringelement 26 hindurch, das in diesem Falle lediglich eine zylinderförmige Durchgangsbohrung besitzt. Alternativ können, wie bereits erwähnt, statt der Paare von Magneten 12a, 12b auch Magnete verwendet werden, die eine entsprechende Durchgangsbohrung für das Befestigungselement 22 aufweisen.

Bei dieser Ausführungsform gemäß den Fig. 3 und 4 greifen die Befestigungselemente, die zweckmäßigerweise als Schrauben ausgebildet sein können, mit ihrem jeweiligen Kopf 24 an dem Endringelement 28 an und sind am anderen Ende mit der Rotorscheibe 18 verbunden, beispielsweise mit eingearbeiteten Gewinden oder eingesetzten Gewindehülsen, wie es vorstehend bereits erläutert ist. Auf diese Weise werden die Endringelemente 28 sowie die von den Endringelementen 28 gehaltenen Komponenten der Rotoranordnung kraftschlüssig mit der Rotorscheibe 18 verbunden.

Eine derartige Bauform der Rotoranordnung mit einteilig bzw. durchgehend ausgebildeten Befestigungselementen in Form von Schrauben, Bolzen oder Nieten vereinfacht einerseits die Fertigung der Komponenten und erleichtert andererseits die Montage einer derartigen Rotoranordnung, da weniger Teile zu montieren sind.

Wichtig ist in diesem Zusammenhang allerdings, daß die Befestigungselemente 22 in Form von Schrauben, Bolzen oder Nieten in Umfangsrichtung voneinander elektrisch isoliert sind und zweckmäßigerweise auch gegenüber den polarisierten Magneten 12, 12a, 12b sowie den Sammlerelementen 14 elektrisch isoliert sind. Zu diesem Zweck können für die Befestigungselemente isolierende Beschichtungen oder aber Kunststoffhülsen verwendet werden. Auch für die Endringelemente 28 sowie die Rotorscheibe 18 können zu diesem Zweck Isoliermaterialien oder zumindest isolierende Beschichtungen verwendet werden.

## Patentansprüche

1. Rotoranordnung für eine elektrische Maschine, insbesondere für eine Transversalflußmaschine, wobei der Rotor (10) in Umfangsrichtung eine Vielzahl von polarisierten Magneten (12; 12a, 12b) und magnetisierbaren Sammlerelementen (14) in abwechselnder Folge in einer Ringanordnung aufweist und wobei der Rotor (10) in axialer Richtung eine an der Rotorachse (30) befestigbare Rotorscheibe (18) aufweist, an der die polarisierten Magneten (12; 12a, 12b) und die magnetisierbaren Sammlerelemente (14) jeweils in einer konzentrischen Ringanordnung befestigt sind,
dadurch gekennzeichnet,
daß die Befestigung mit Befestigungselementen (22) vorgesehen ist, die durch die polarisierten Magneten (12; 12a, 12b) hindurchgehen und an der Rotorscheibe (18) bzw. an einem axial beabstandeten, mit der Rotorscheibe (18) verbundenen Isolierringelement (26) befestigt sind.

2. Anordnung nach Anspruch 1,
dadurch gekennzeichnet,
daß die polarisierten Magneten (12; 12a, 12b) mit axialen Durchgangsbohrungen versehen oder in radialer Richtung paarweise angeordnet und durch einen Spalt (32) voneinander getrennt sind, durch den die Befestigungselemente (22) mit ihrem Schaft hindurchgehen.

3. Anordnung nach Anspruch 1 oder 2,
dadurch gekennzeichnet,
daß die Isolierringelemente (26) und axial außen liegende Endringelemente (28) mit axialen Einsenkungen (36) versehen sind, die Widerlager für die Köpfe (24) der Befestigungselemente (22) bilden.

4. Anordnung nach einem der Ansprüche 1 bis 3,
dadurch gekennzeichnet,
daß die Befestigungselemente (22) als Schrauben, Bolzen oder Nieten ausgebildet sind.

5. Anordnung nach einem der Ansprüche 1 bis 4,
dadurch gekennzeichnet,
daß die jeweiligen Isolierringelemente (26) und/oder die Rotorscheibe (18) mit Gewinden oder Gewindeeinsätzen (34) zur Aufnahme von Schrauben (22) versehen sind.

6. Anordnung nach einem der Ansprüche 1 bis 5,
dadurch gekennzeichnet,
daß die Sammlerelemente (14) in axialer Richtung zwischen der Rotorscheibe (18) und einem Isolierringelement (26) bzw. zwischen einem Paar von Isolierringelementen (26) bzw. zwischen einem Isolierringelement (26) und einem axial äußeren Endringelement (28) eingeklemmt sind und in Umfangsrichtung zwischen den Befestigungselementen (22) angeordnet sind.

7. Anordnung nach einem der Ansprüche 1 bis 6,
dadurch gekennzeichnet,
daß die Sammlerelemente (14) als geblechte Weicheisenteile ausgebildet sind, die in axialer Richtung geschichtet sind.

8. Anordnung nach einem der Ansprüche 1 bis 7,
dadurch gekennzeichnet,
daß die Isolierringelemente (26) aus Kunststoff bestehen.

9. Anordnung nach einem der Ansprüche 1 bis 8,
dadurch gekennzeichnet,
daß die Komponenten der Rotoranordnung zusätzlich mit Klebungen und/oder formschlüssig ineinandergreifenden Teilen verbunden sind.

10. Anordnung nach einem der Ansprüche 1 bis 9,
dadurch gekennzeichnet,
daß die Anordnung in axialer Richtung eine in der Mitte angeordnete Rotorscheibe (18) aus nicht magnetisierbarem Material und zu beiden Seiten mindestens eine Ringanordnung mit abwechselnden Sammlerelementen (14) und polarisierten Magneten (12; 12a, 12b) aufweist, wobei die Ringanordnungen auf der einen Seite in Umfangsrichtung um einen Pol versetzt zu denen auf der gegenüberliegenden Seite angeordnet sind,
und daß die Befestigungselemente (22) um je einen Pol versetzt abwechselnd von den beiden Seiten des Rotors (10) vorgesehen sind.

11. Anordnung nach Anspruch 10,
dadurch gekennzeichnet,
daß bei einer Anordnung mit jeweils zwei Ringanordnungen zu beiden Seiten der Rotorscheibe (18) die Befestigungselemente (22) in Umfangsrichtung abwechselnd die axial inneren polarisierten Magneten (12; 12a, 12b) und die Isolierringelemente (26) an der Rotorscheibe (18) befestigen sowie die axial äußeren polarisierten Magneten (12; 12a, 12b) und die axial außen liegenden Endringelemente (28) an den Isolierringelementen (26) befestigen.

12. Anordnung nach einem der Ansprüche 1 bis 11,
dadurch gekennzeichnet,
daß die Befestigungselemente (22) durch mindestens zwei in axialer Richtung aufeinanderfolgende Ringanordnungen hindurchgehen, wobei sie die polarisierten Magneten (12; 12a, 12b) und jeweils ein in axialer Richtung dazwischenliegendes Isolierringelement (26) durchsetzen,
und daß die Befestigungselemente (22) in Umfangsrichtung elektrisch gegeneinander isoliert sind und auf der einen Seite an einem Endringelement (28) angreifen und auf der anderen Seite an der Rotorscheibe (18) befestigt sind.

13. Anordnung nach einem der Ansprüche 1 bis 12,
dadurch gekennzeichnet,
daß die Befestigungselemente (22) gegeneinander sowie gegenüber den polarisierten Magneten (12; 12a, 12b) und gegenüber den Sammlerelementen (14) elektrisch isoliert sind.

## Claims

1. Rotor arrangement for an electric machine, in particular a transversal-flow machine, in which the rotor (10) comprises in the peripheral direction a plurality of polarised magnets (12; 12a, 12b) and magnetisable collector elements (14) in alternating succession in an annular arrangement, and in which the rotor (10) comprises in the axial direction a rotor plate (18), which is mountable to the rotor axis (30) and to which the polarised magnets (12; 12a, 12b) and the magnetisable collector elements (14) are attached in a respective concentric annular arrangement, **characterised in that** the mounting is carried out by means of mounting elements (22) which pass through the polarised magnets (12; 12a, 12b) and are attached to the rotor plate (18) or an axially distanced annular insulating element (26) which is connected to the rotor plate (18).

2. Arrangement according to Claim 1, **characterised in that** the polarised magnets (12; 12a, 12b) either have axial throughbores or are arranged in the radial direction in pairs and separated from each other by a gap (32) which is passed through by the by the shaft of the mounting elements (22).

3. Arrangement according to Claim 1 or 2, **characterised in that** the annular insulating elements (26) and the annular end elements (28) which are positioned axially outside are provided with axial recesses (36) which form abutments for the heads (24) of the mounting elements (22).

4. Arrangement according to one of Claims 1 to 3, **characterised in that** the mounting elements (22) are in the form of screws, bolts or rivets.

5. Arrangement according to one of Claims 1 to 4, **characterised in that** the respective annular insulating elements (26) and/or the rotor plate (18) are provided with threads or threaded inserts (34) to accommocate bolts (22).

6. Arrangement according to one of Claims 1 to 5, **characterised in that** the collector elements (14) are clamped in the axial direction between the rotor plate (18) and in annular insulating element (26) or between a pair of annular insulating elements (26) or between an annular insulating element (26) and an axially outer annular end element (28) and arranged in the peripheral direction between the mounting elements (22).

7. Arrangement according to one of Claims 1 to 6, **characterised in that** the collector elements (14) are in the form of sheet metal soft iron parts which are layered in the axial direction.

8. Arrangement according to one of Claims 1 to 7, **characterised in that** the annular insulating elements (26) are made of a plastic material.

9. Arrangement according to one of Claims 1 to 8, **characterised in that** the components of the rotor arrangement are additionally connected to glued parts and/or positively interengaging parts.

10. Arrangement according to one of Claims 1 to 9, **characterised in that** the arrangement comprises a rotor plate (18) of non-magnetisable material arranged in the axial direction in the middle, and on both sides at least one annular arrangement with alternating collector elements (14) and polarised magnets (12; 12a, 12b), and that the annular arrangements are on the one side peripherally offset by one pole relative to those of the opposite side, and that the mounting elements (22) are provided so as to be alternatingly offset by each one pole from both sides of the rotor (10).

11. Arrangement according to Claim 10, **characterised in that**, with an arrangement of two respective annular arrangements on both sides of the rotor plate (18), the mounting elements (22) alternately and peripherally attach to the rotor plate (18) the axially inner polarised magnets (12; 12a, 12b) and the annular insulating elements (26) as well as the axially outer polarised magnets (12; 12a, 12b) and the axially outer annular end elements (28) to the annular insulating elements (26).

12. Arrangement according to one of Claims 1 to 11, **characterised in that** the mounting elements (22) pass through at least two axially successive annular arrangements whilst passing through the polarised magnets (12; 12a, 12b) and a respective annular insulating element (26) positioned thereinbetween in the axial direction, and that the mounting elements (22) are in the peripheral direction electrically insulated from each other and engage on the one side an annular end element (28) and on the other side the rotor plate (18).

13. Arrangement according to one of Claims 1 to 12, **characterised in that** the mounting elements (22) are electrically insulated against each other as well as against the polarised magnets (12; 12a, 12b) and against the collector elements (14),

## Revendications

1. Agencement de rotor pour une machine électrique, en particulier une machine à flux transversal, dans lequel le rotor (10) présente en direction circonférentielle une pluralité d'aimants polarisés (12; 12a, 12b) et d'éléments collecteurs aimantables (14) se succédant en alternance dans un agencement annulaire, et dans lequel le rotor (10) présente en direction axiale un disque de rotor (18) à fixer à l'axe de rotor (30), auquel les aimants polarisés (12; 12a, 12b) et les éléments collecteurs aimantables (14) sont fixés respectivement dans des agencements annulaires concentriques, caractérisé en ce qu'il est prévu une fixation avec des éléments de fixation (22), qui passent à travers les aimants polarisés (12; 12a, 12b) et qui sont fixés au disque de rotor (18), respectivement à un élément annulaire isolant (26) assemblé au disque de rotor (18) avec un écartement axial.

2. Agencement suivant la revendication 1, caractérisé en ce que les aimants polarisés (12; 12a, 12b) sont pourvus de trous de passage axiaux ou sont disposés par paires en direction radiale et sont séparés l'un de l'autre par un intervalle (32), à travers lequel passe la tige des éléments de fixation (22).

3. Agencement suivant la revendication 1 ou 2, caractérisé en ce que les éléments annulaires isolants (26) et les éléments annulaires d'extrémité (28) situés axialement à l'extérieur sont pourvus de cavités axiales (36), qui forment des butées pour les têtes (24) des éléments de fixation (22).

4. Agencement suivant l'une quelconque des revendications 1 à 3, caractérisé en ce que les éléments de fixation (22) sont constitués par des vis, des boulons ou des rivets.

5. Agencement suivant l'une quelconque des revendications 1 à 4, caractérisé en ce que les éléments annulaires isolants (26) et/ou le disque de rotor (18) sont pourvus respectivement de filetages ou d'inserts filetés (34) pour recevoir des vis (22).

6. Agencement suivant l'une quelconque des revendications 1 à 5, caractérisé en ce que les éléments collecteurs (14) sont pincés en direction axiale respectivement entre le disque de rotor (18) et un élément annulaire isolant (26), ou entre une paire d'éléments annulaires isolants (26), ou entre un élément annulaire isolant (26) et un élément annulaire d'extrémité (28) situé axialement à l'extérieur et en ce qu'ils sont disposés entre les éléments de fixation (22) en direction circonférentielle.

7. Agencement suivant l'une quelconque des revendications 1 à 6, caractérisé en ce que les éléments collecteurs (14) sont constitués par des pièces en fer doux feuilletées, qui sont empilées en direction axiale.

8. Agencement suivant l'une quelconque des revendications 1 à 7, caractérisé en ce que les éléments annulaires isolants (26) sont réalisés en une matière synthétique.

9. Agencement suivant l'une quelconque des revendications 1 à 8, caractérisé en ce que les composants de l'agencement de rotor sont en plus assemblés avec des collages et/ou par des pièces de forme conjuguée engagées l'une dans l'autre.

10. Agencement suivant l'une quelconque des revendications 1 à 9, caractérisé en ce que l'agencement présente en direction axiale un disque de rotor (18) en matière non aimantable disposé au milieu et de part et d'autre au moins un agencement annulaire avec en alternance des éléments collecteurs (14) et des aimants polarisés (12; 12a, 12b), les agencements annulaires situés d'un côté étant décalés d'un pôle, en direction circonférentielle, par rapport à ceux du côté opposé, et en ce que les éléments de fixation (22) sont prévus avec un décalage d'un pôle en alternance sur chacun des deux côtés du rotor (10).

11. Agencement suivant la revendication 10, caractérisé en ce que, dans un agencement avec chaque fois deux agencements annulaires de part et d'autre du disque de rotor (18), les éléments de fixation (22) fixent en alternance, en direction circonférentielle, les aimants polarisés axialement intérieurs (12; 12a, 12b) et les éléments annulaires isolants (26) au disque de rotor (18) ainsi que les aimants polarisés axialement extérieurs (12; 12a, 12b) et les éléments annulaires d'extrémité (28) situés axialement à l'extérieur aux éléments annulaires isolants (26).

12. Agencement suivant l'une quelconque des revendications 1 à 11, caractérisé en ce que les éléments de fixation (22) passent à travers au moins deux agencements annulaires se succédant en direction axiale, et qu'ainsi ils traversent chacun les aimants polarisés (12; 12a, 12b) et un élément annulaire isolant (26) situé entre ceux-ci en direction axiale, et en ce que les éléments de fixation (22) sont électriquement isolés l'un de l'autre en direction circonférentielle et qu'ils s'accrochent d'un côté à un élément annulaire d'extrémité (28) et qu'ils sont fixés de l'autre côté au disque de rotor (18).

13. Agencement suivant l'une quelconque des revendications 1 à 12, caractérisé en ce que les éléments de fixation (22) sont électriquement isolés l'un par rapport à l'autre ainsi que par rapport aux aimants polarisés (12; 12a, 12b) et par rapport aux éléments collecteurs (14).
